## Europäisches Patentamt
## European Patent Office
## Office européen des brevets

(19)

(11) Publication number: **0 012 128**
**B1**

# EUROPEAN PATENT SPECIFICATION

(12)

(45) Date of publication of patent specification: **13.10.82**

(51) Int. Cl.³: **F 16 K  5/20**

(21) Application number: **79890026.2**

(22) Date of filing: **17.08.79**

(54) Spring assembly for floating seat ring.

| | |
|---|---|
| (30) Priority: **13.11.78 US 960499** | (73) Proprietor: **ACF INDUSTRIES, INCORPORATED**<br>**750 Third Avenue**<br>**New York 10017, N.Y. (US)** |
| (43) Date of publication of application:<br>**11.06.80 Bulletin 80/12** | (72) Inventor: **Kacal, Gary W.**<br>**P.O.Box 491 5203 J.Albert Drive**<br>**East Bernard, Texas 77435 (US)**<br>Inventor: **Partridge, Charles C.**<br>**11136 Cedarview**<br>**Houston, Texas 77041 (US)** |
| (45) Publication of the grant of the patent:<br>**13.10.82 Bulletin 82/41** | |
| (84) Designated Contracting States:<br>**AT DE GB IT** | |
| (56) References cited:<br>**EP - A - 0 006 836**<br>**DE - A - 1 808 290**<br>**DE - A - 2 600 946**<br>**DE - C - 448 817**<br>**FR - A - 1 575 883**<br>**US - A - 2 480 529**<br>**US - A - 2 548 128**<br>**US - A - 3 387 815** | (74) Representative: **Kretschmer, Adolf, Dipl.-Ing.**<br>**Schottengasse 3a**<br>**A-1014 Wien (AT)** |

Courier Press, Leamington Spa, England.

## Spring assembly for floating seat ring

The invention relates to a spring assembly for a floating seat ring in a valve including a valve body having inlet and outlet flow passages communicating with a valve chamber, a valve member mounted in said valve chamber for movement between open and closed positions relative to the flow passages, an annular shoulder at the juncture of each flow passage with the valve chamber, a seat ring mounted about each flow passage and having an annular rear face in opposed spaced relation to the associated shoulder to provide a spring pocket therebetween and an undulated annular wave spring assembly having a plurality of rear and front nodes in the spring pocket between said rear face and said shoulder adapted to urge the seat ring toward the valve member, the rear nodes being in contact with the shoulder and the front nodes being in contact with the rear face. Heretofore, single annular wave springs have been utilized to urge seat rings into sealing engagement with an associated valve member, such as a ball or gate. As shown in US—A— 2 548 128, US—A—3 387 815 and US—A— 2 480 529, annular undulated wave springs are illustrated to urge a seat member into sealing engagement with an associated ball valve member. However, the prior art does not show the use of a plurality of annular undulated wave springs about a seat ring which are held in an oriented relation to each other so that contiguous wave springs are staggered with respect to the nodes of the springs.

In connection with hydraulic telescopic shock absorbers for motor vehicles it is known from DE—A—2 600 946 to use for biasing a valve plate covering throttle openings in a working piston a spring assembly including a plurality of contiguous undulated annular wave springs being staggered with the front nodes of one wave spring in opposed contact relation to the rear nodes of the adjacent wave spring, and means to maintain the wave springs in such staggered position.

As illustrated in copending application EP—A—6 836 (Application No. 7989 0002.3, priority date 3.5.78, date of publication 9.1.80, designated states AT, DE, GB, IT), a so-called top entry ball valve is shown in which the upper cover plate is first removed, and then the seat rings and ball are easily removed from the valve body while the valve is in place in a flowline. The rotative movement of the ball is utilized to cam the seat rings away from the ball to a fully retracted position where they are releasably retained while the ball is removed. Thus, a relatively large floating movement of the seat rings is desired and necessary in order to permit the removal of the ball. For that purpose a spring assembly including a plurality of annular wave springs is being used. A camming tool is usually utilized with the ball to cam the seat rings away from the ball. The present invention is particularly adapted for use with the so-called top entry ball valve arrangement shown in application EP—A—6 836 but has utility with any floating seat arrangement where it is desired to urge continuously the seat ring into engagement with an adjacent valve member.

The main object of the present invention is to provide a spring assembly comprising a plurality of undulated annular wave springs offering a maximum floating movement with a minimum of parts, and means for geometrically arranging the springs without weakening them and without the necessity of additional diameter.

According to the invention the problem is solved in that the spring assembly includes at least a pair of contiguous undulated annular wave springs being staggered with the front nodes of one wave spring of the pair in opposed contact relation to the rear nodes of the other wave spring of the pair, and means to maintain each pair of wave springs in such staggered position comprising a flat portion about the outer circumference of the seat ring and a cooperating nesting flat portion about the inner circumference of the wave springs to hold the wave springs against rotative movement.

The advantages offered by the invention are mainly that there is no need of radial projections on the springs which on the one hand would add to overall volume and on the other hand would have to be arranged near portions of the springs where forces are being transmitted between springs so that the projections engage each other under all conditions, so that such projections are subjected to wear. Now the springs can be furnished with their nesting flat portion about the inner circumference at their production without any additional step.

Various other objects, advantages and features of this invention will be described in detail below with reference to specific embodiments shown in the drawings, in which:—

Fig. 1 is a longitudinal section of a ball valve of the top entry type having floating seat rings, with the spring assembly comprising the present invention urging the seat rings into engagement with the adjacent ball member;

Fig. 2 is an enlarged sectional view showing a seat ring cammed by the ball valve member into a retracted position and held in the retracted position by retaining means;

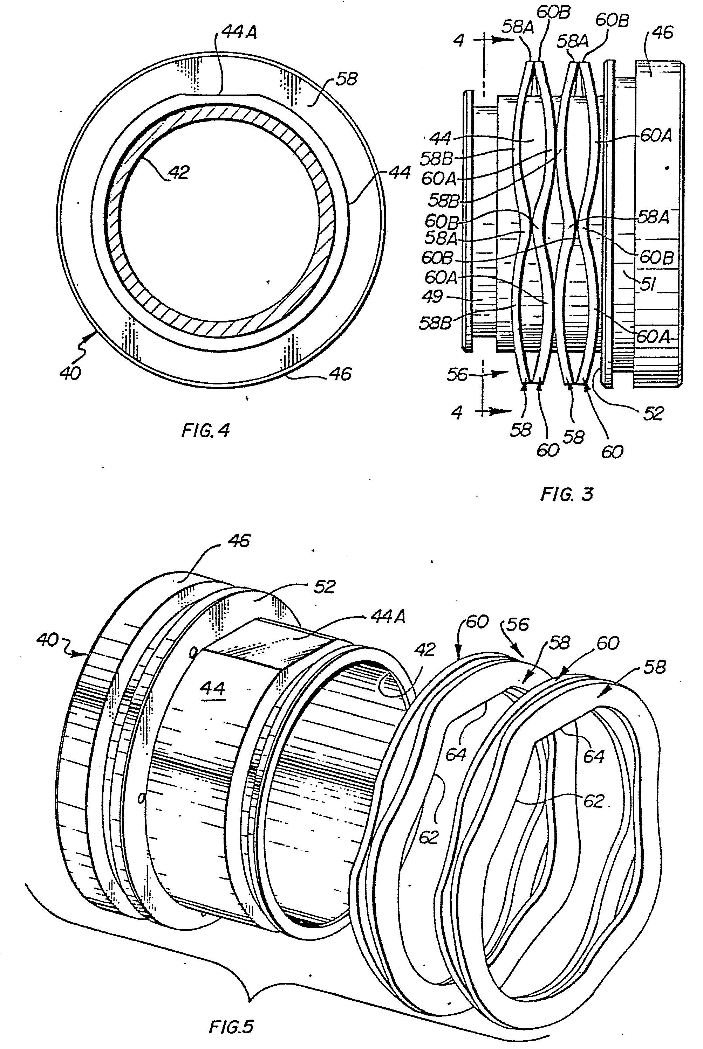

Fig. 3 is a side elevation view of the seat ring when removed from the valve assembly shown in Fig. 1 and showing the spring assembly mounted about the outer circumference of the seat ring;

Fig. 4 is a section taken generally along the line of 4—4 of Fig. 3; and

Fig. 5, is a perspective of the seat ring and spring assembly shown in Figs. 3 and 4 with the wave springs of the spring assembly being removed from the seat ring.

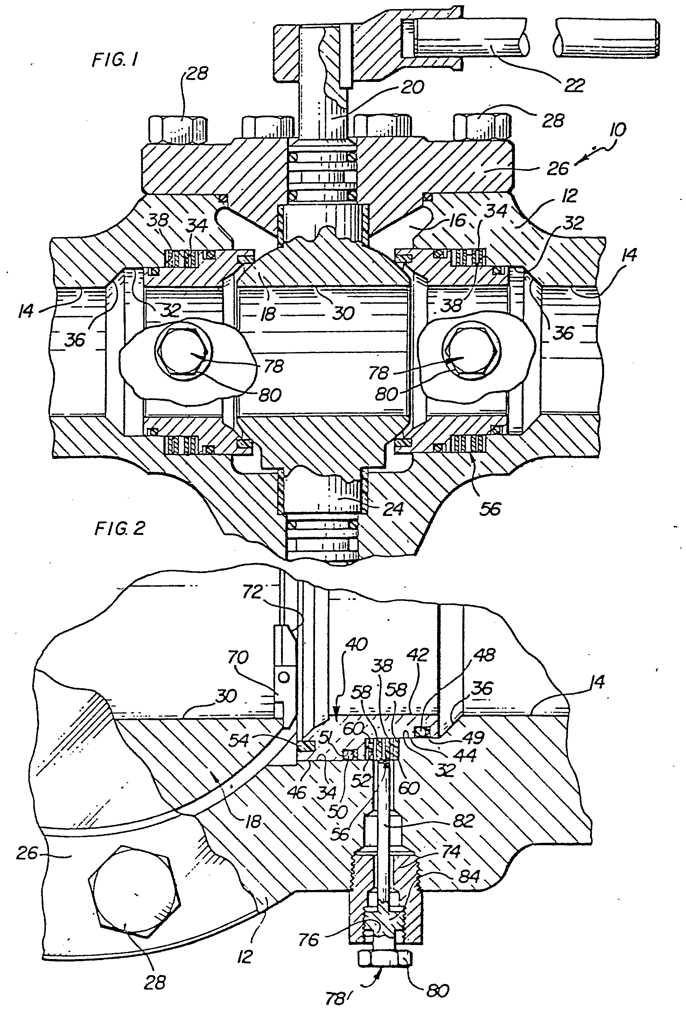

Referring now to the drawings, a vall valve structure is shown generally at 10 including a valve body 12 having flow passages 14. A valve chamber 16 between flow passages 14 has a ball valve member 18 mounted therein for movement between open and closed positions. A stem 20 secured to ball valve member 18 has a handle 22 which may be gripped for moving ball valve 18 between open and closed positions relative to flow passages 14. A lower trunnion 24 is mounted on the lower side of ball valve member 18. An upper cover plate 26 is removably connected to valve body 12 by suitable studs 28. Ball valve member 18 has a flow passage 30 therethrough which is adapted to be aligned with flow passages 14 when moved to an open position thereof as shown in Fig. 1.

Valve body 12 at the juncture of flow passages 14 with valve chamber 16 has a pair of enlarged bore portions or counterbores defined by intermediate diameter bore portion 32 and enlarged diameter bore portion 34. Intermediate diameter bore portion 32 defines a tapered shoulder or abutment 36 and enlarged diameter bore portion 34 defines a shoulder or abutment 38 which faces valve chamber 16. A seat ring generally indicated at 40 is mounted within counterbores 32 and 34 for floating longitudinal movement relative to ball valve member 18. Seat ring 40 has an inner circumferential or peripheral surface 42, a small diameter outer peripheral surface 44, and a large diameter outer peripheral surface 46. O-rings 48 and 50 are mounted in respective grooves 49, 51 in respective outer circumferential surfaces 44 and 46. O-rings 48 and 50 are adapted to block or restrict the flow of any lubricant inserted therebetween. Seat ring 40 has a rear face or shoulder defined at 52 extending between circumferential surfaces 44 and 46. A resilient sealing element 54 extends from the front face of seat ring 40 and is adapted to engage in sealing relation the adjacent sealing surface of ball valve member 18.

Mounted in the pocket formed between rear face 42 and the opposed valve body shoulder 38 is a spring assembly comprising the present invention and generally indicated by the numeral 56. Spring assembly 56 comprises a plurality of wave springs with alternate wave springs being indicated at 58 and intervening wave springs being indicated at 60. Each contiguous pair of wave springs 58, 60 is arranged in a staggered relation to each other. Each wave spring 58, 60 has four front nodes indicated at 58A and 60A respectively. The nodes are arranged at a 90° relation to each other about the circumference of the respective wave spring. Correspondingly, rear nodes 58B and 60B are provided about the circumference of respective wave springs 58, 60 between front nodes 58A and 60A. Front and rear nodes on a contiguous pair of wave springs are in opposed relation to each other. For example, rear nodes 58B on spring 58 are in opposed relation to front nodes 60A on the contiguous wave spring 60. Thus, rear nodes 60B on wave spring 60 are in contact relation with front nodes 58A on spring 58 of the contiguous pair. To hold the wave springs in oriented staggered relation and to prevent the wave springs from moving circumferentially about circumferential surface 44 of seat ring 40, surface 44 has a flat portion 44A positioned thereon. The inner circumference 62 of each wave spring 58, 60 has an inner flat portion 64 which is arranged in nested relation to flat surface 44A on seat ring 40. In this relation, wave springs 58 and 60 are prevented from any rotation after being positioned on seat ring 40. Wave springs 58 and 60 are generally identical but upon initial positioning on seat ring 40, wave springs 60 are rotated around 45° with respect to wave springs 58. Also, flat portion 64 on wave springs 60 is positioned with respect to the nodes at a location staggered forty-five degrees (45°) circumferentially from flat portion 64 on wave springs 58 with respect to its nodes. By this arrangement, rear nodes 60B on springs 60 are in contact relation with the front nodes 58A on springs 58 thereby to provide a maximum expansion of wave springs 58 and 60 when arranged in a plurality of springs about a seat ring.

Referring to Fig. 2, seat ring 40 is shown as cammed rearwardly to its rearmost position with springs 58 and 60 in a generally flattened position thereof. A camming tool indicated generally at 70 and having a front cam face 72 is inserted in opening 30 of valve member 18 after cover plate 26 is removed and valve member 18 is rotated around forty-five degrees (45°) from its open position. When valve member 18 is rotated to fully open position surface 72 engages the front face of seat ring 40 to urge seat ring 40 to the rearmost position indicated in Fig. 2. While held in this position by cam tool 70 at the open position, a retainer is actuated to hold seat ring 40 in retracted position. The retainer comprises a housing 74 threaded within valve body 12 and having an internally threaded central bore 76. A threaded plunger indicated generally at 78 has an integral head 80 on its outer end and an elongated pin 82 on its inner end extending from the body 84. Upon rotation of head 80 by a suitable wrench or the like, the inner end of pin 82 engages wave springs 58, 60 to compress springs 58, 60 against the adjacent circumferential surface 44 of seat ring 40 to hold seat ring 40 in a retracted position. Wave springs 58, 60 are made inoperable when engaged by pin 82 in a tight frictional relation. In this position, ball 18 may be removed. Then seal ring 40 may be released from retracted position by loosening plunger 78 and then removed from valve body 12. New or repaired seat rings 40 may be reinserted in valve body 12 and moved to a retracted position where they are held by the retainers to permit reinsertion of ball valve 18.

## Claims

1. Spring assembly for a floating seat ring in a valve (10) including a valve body (12) having inlet and outlet flow passages (14) communicating with a valve chamber (16), a valve member (18) mounted in said valve chamber (16) for movement between open and closed positions relative to the flow passages (14), an annular shoulder (38) at the juncture of each flow passage with the valve chamber, a seat ring (40) mounted about each flow passage and having an annular rear face (52) in opposed spaced relation to the associated shoulder to provide a spring pocket therebetween and an undulated annular wave spring assembly (56) having a plurality of rear (58B, 60B) and front nodes (58A, 60A) in the spring pocket between said rear face (52) and said shoulder (38) adapted to urge the seat ring (40) toward the valve member (18), the rear nodes (58B, 60B) being in contact with the shoulder (38) and the front nodes (58A, 60A) being in contact with the rear face (52), characterized in that the spring assembly (56) includes at least a pair of contiguous undulated annular wave springs (58, 60) being staggered with the front nodes (58A) of one wave spring (58) of the pair in opposed contact relation to the rear nodes (60B) of the other wave spring (60) of the pair, and means to maintain each pair of wave springs in such staggered position comprising a flat portion (44A) about the outer circumference (44) of the seat ring (40) and a cooperating nesting flat portion (64) about the inner circumference (62) of the wave springs (58, 60) to hold the wave springs against rotative movement.

2. A spring assembly as claimed in claim 1, in which each wave spring (58, 60) has a plurality of alternate front nodes (58A, 60A) and intervening rear nodes (58B, 60B), the front nodes being spaced circumferentially of the wave spring about 90° with respect to each other.

3. A spring assembly as claimed in claim 1 or 2, for a top entry ball valve including a ball (18) mounted in said valve chamber (16) for rotation between open and closed positions relative to the flow passages (14), an upper cover plate (26) removably secured to the valve body (12) and permitting removal of the ball (18) from the valve body (12) when the cover plate (26) is removed, in which means is provided to urge the seat ring (40) to a retracted position in which the wave springs (58, 60) are compressed, and means (78, 80, 82) to hold the seat ring (40) in the retracted position.

4. A spring assembly as claimed in claim 3, in which the means to hold the seat ring (40) in retracted position comprises a plunger (78) adapted to contact the outer circumference of the wave springs (58, 60) to urge the inner circumference of the wave springs into frictional engagement with the seat ring (40), said plunger (78) being operated from a position outside the valve body (12).

## Patentansprüche

1. Federnanordnung für einen verschieblich gelagerten Sitzring in einem Ventil (10), das ein Ventilgehäuse (12) mit Ein- und Auslaßrohransätzen (14), die mit einer Ventilkammer (16) in Verbindung stehen, aufweist, ferner einen in der Ventilkammer (16) angeordneten Abschlußkörper (18), der zwischen einer Offen- und einer Schließstellung mit Bezug auf die Rohransätze (14) bewegbar ist, weiters eine ringförmige Schulterfläche (38) an der Übergangsstelle von jedem Rohransatz zur Ventilkammer, einen rings um jeden Rohransatz angeordneten Sitzring (40) mit einer ringförmigen Rückfläche (52), die der ihr zugeordneten Schulterfläche mit Abstand gegenübersteht, wodurch dazwischen eine Federtasche gebildet ist, und endlich eine Anordnung (56) gewellter ringförmiger Federn mit einer Anzahl rückseitiger (58B, 60B) und vorderseitiger (58A, 60A) Wellenbäuche, welche Federn in der Federtasche zwischen der Rückfläche (52) und der Schulterfläche (38) eingepaßt sind, um den Sitzring (40) gegen den Abschlußkörper (18) zu drücken, wobei die rückseitigen Wellenbäuche (58B, 60B) mit der Schulterfläche (38) in Kontakt stehen und die vorderseitigen (58A, 60A) mit der oberwähnten Rückfläche (52), dadurch gekennzeichnet, daß die Federnanordnung (56) mindestens ein Paar aneinandergrenzender ringförmiger gewellter Federn (58, 60) enthält, wobei die vorderseitigen Wellenbäuche (58A) einer Wellenfeder (58) des Paares den rückseitigen Wellenbäuchen (60B) der anderen Wellenfeder (60) des Paares berührend gegenüberstehen, und daß Mittel vorgesehen sind, jedes Paar Wellenfedern in dieser gegenüberstehenden Stellung zu halten, welche Mittel in einer Abflachung (44A) am Außenumfang (44) des Sitzringes (40) sowie einer mit ihr im Eingriff zusammenwirkenden Flachstelle (64) am Innenumfang (62) der Wellenfedern (58, 60) bestehen, wodurch letztere an einer Drehbewegung gehindert sind.

2. Federnanordnung nach Anspruch 1, in welcher jede Wellenfeder (58, 60) eine Mehrzahl abwechselnder vorderseitiger Wellenbäuche (58A, 60A) und dazwischenliegender rückseitiger Wellenbäuche (58B, 60B) aufweist, wobei der vorderseitigen Wellenbäuche über den Umfang der Wellenfeder mit etwa 90° Abstand voneinander verteilt sind.

3. Federnanordnung nach Anspruch 1 oder 2, für einen Hahn mit einem von oben einsetzbaren Kugelküken (18), das in die Ventilkammer (16) eingesetzt ist und zwischen einer Offen- und einer Schließstellung mit Bezug auf die Rohransätze (14) verdrehbar ist, und mit einer oberen Abdeckplatte (26), die am Ventilgehäuse (12) ausbaubar befestigt ist und die, wenn sie ausgebaut ist, Ausbau des Kugelkükens (18) aus dem Ventilgehäuse (12) ermöglicht, wobei Mittel vorgesehen sind, den Sitzring (40) in eine zurückgezogene Stellung zu drücken, in welcher die Wellenfedern (58, 60) zusammengedrückt sind, und Mittel (78, 80, 82), den Sitzring (40) in der zurückgezogenen Stellung zu halten.

4. Federnanordnung nach Anspruch 3, wobei die Mittel zum Zurückhalten des Sitzringes (40) in der zurückgezogenen Stellung einen Druckstempel (78) enthalten, der dazu geeignet ist, die Wellenfedern (58, 60) an ihrem Außenumfang zu kontaktieren, um den Innenumfang der Wellenfedern in Reibungseingriff mit dem Sitzring (40) zu drücken, wobei der Druckstempel (78) von einer Stelle außerhalb des Ventilgehäuses (12) betätigt wird.

**Revendications**

1. Jeu de ressorts pour un anneau de siège coulissant dans un robinet (10) comprenant un carter (12) avec des tuyaux (14) d'admission et de sortie qui sont en communication avec une chambre (16) de robinet; avec un obturateur (18) monté dans ladite chambre (16) de robinet pour mouvement entre une position ouverte et une position fermée par rapport aus tuyaux (14); avec un épaulement annulaire (38) près de la jonction entre chaque tuyau et la chambre de robinet; avec un anneau de siège de robinet (40) monté autour de chacun des tuyaux et ayant une surface annulaire postérieure (52) disposée à distance en relation opposée à l'épaulement coordonée pour y intercaler une poche de ressorts; et avec un jeu de ressorts annulaires ondulés (56) qui ont plusieurs noeuds de derrière (58B, 60B) et de devant (58A, 60A) et qui sont positionnés dans ladite poche de ressorts entre ladite surface annulaire postérieure (52) et ledit épaulement (38) pour serrer l'anneau de siège de robinet (40) contre l'obturateur (18), les noeuds de derrière (58B, 60B) contactant l'épaulement (38), et les noeuds de devant (58A, 60A) contactant la surface postérieure (52) de l'anneau de siège, ce jeu de ressorts étant caractérisé en ce qu'il comprend au moins une paire de ressorts annulaires ondulés (58, 60) contigus, les noeuds de devant (58A) d'un ressort ondulé d'une paire étant en contact en relation opposée avec les noeuds de derrière (60B) de l'autre ressort ondulé (60) de cette paire; et des moyens pour retenir chaque paire de ressorts ondulés dans ce contact opposé, lesquels moyens comprennent une portion aplatie (44A) à la circonférence extérieure (44) de l'anneau de siège (40) et, s'y engrenant en en coopération, une portion platte (64) à la circonférence intérieure (62) des ressorts ondulés (58, 60) pour empêcher les ressorts ondulés de se mouvoir rotativement.

2. Un jeu de ressorts selon la revendication 1, dans lequel chaque ressort ondulé (58, 60) a plusieurs noeuds de devant (58A, 60A) alternants et noeuds de derrière (58B, 60B) y intercalés, les noeuds de devant étant distances les uns des autres environ à 90° sur la circonférence du ressort ondulé.

3. Un jeu de ressorts selon la revendication 1 ou 2, pour un robinet à clef noix accessible d'en haut, avec une clef sphérique (18) montée dans ladite chambre de ·robinet (16) pour mouvement rotatif entre une position ouverte et une position fermée par rapport aux tuyaux (14); avec une plaque de recouvrement (26) en haut laquelle est fixée amoviblement sur le carter (12) et permet retirer la clef noix (18) hors du carter (12) si la plaque de recouvrement (26) est ôtée; avec des moyens pour serrer l'anneau de siège (40) à une position refoulée où les ressorts ondulés (58, 60) sont comprimés; et avec des moyens (78, 80, 82) pour retenir l'anneau de siège dans la position refoulée.

4. Un jeu de ressorts selon la revendication 3, où les moyens pour retenir l'anneau de siège (40) dans la position refoulée comprennent un piston (78) approprié à contacter la circonférence extérieure des ressorts ondulés (58, 60) pour serrer la circonférence intérieure des ressorts ondulés en contact à friction contre l'anneau de siège (40), ledit piston (78) étant opéré d'une position en dehors du carter (12) du robinet.

FIG. 1

FIG. 2

0 012 128

FIG. 4

FIG. 3

FIG. 5

2